# EUROPEAN PATENT APPLICATION

(11) **EP 4 691 687 A1**
(43) Date of publication of application: **11.02.2026**
(21) Application number: 24185583.2
(22) Date of filing: 06.08.2024
(51) Int. Cl.: B23P 25/00, B23K 26/00, B23K 26/70

(54) **MACHINABILITY IMPROVEMENT**

(71) Applicant: Technická Univerzita V Kosiciach, 04200 Kosice-Sever (SK)
(72) Inventor: Monková, Katarína, Pre ov (SK); Monka, Peter Pavol, Pre ov (SK)

(57) **Abstract**

The application of the invention provides an industrially usable improvement in the machinability of hard-to-machine materials through controlled volumetric heating of the surface layer intended for removal in the form of chips by the action of pulsed penetrating coherent radiation. It eliminates the disadvantages of current laser-assisted machining (LAM) methods and significantly advances the possibilities for improving the machinability of this group of materials. The invention is based on the physical principle of transforming the energy of penetrating coherent radiation into thermal energy during interaction with the material. This principle generates a temperature field in the volume of the machined material and ensures a more even distribution of heat. The physical parameters of the radiation used ensure access to places that are shielded in the real working environment - for example, by a tool, workpiece, preparation, cooling medium. This enables laser assisted machining and in previously unthinkable applications, e.g. when drilling deep holes. Another significant advantage compared to previous approaches is the elimination of reflectivity from the surface of the interacted material. The invention also makes it possible to significantly increase the durability of the tool by eliminating the thermal shocks of the cutting wedge during a periodic method of machining manifested by phases of engagement in the processed material and phases outside of engagement.

## Description

### Field of invention

The invention relates to improving the machinability of hard-to-machine materials by controlled volume heating of the surface layer intended for removal in the form of classes by means of pulsed penetrating coherent radiation. The term difficult-to-machine materials refers to extremely tough, strong, hard and brittle materials, including glass, ceramics and semiconductors. The invention falls into the industrial areas of defined people 3. Separation (technology of reducing cohesion between material particles) according to the DIN 8580 standard, while its usability mainly assumes subgroups 3.2 Machining with a geometrically defined cutting wedge and 3.3 Machining with a geometrically undefined cutting wedge.

### Background to the invention

Machining is one of the most important technological methods due to the achievement of high precision of dimensions and shapes, but at the same time it shows a relatively high level of labor when processing modern materials with a low degree of machinability.

In the case of these materials, technical solutions are mainly taken by changing the temperature of the workpiece in order to adjust the properties of the machined material in order to achieve better machining results.

The first group is cryogenic machining used for machined materials whose machinability is improved by subcooling.

The second group is thermal machining for materials where machinability is improved by heating with a heat source (flame, plasma, laser, etc.).

The most important of the thermal methods (assessed according to the share of professional publications) is laser-assisted machining (Laser-Assisted Machining). Its principle is to heat the surface layer of the machined object in order to improve chip removal conditions, increase tool life, reduce cutting forces, achieve a better surface, etc. For example, the publication Bharat N., Bose P.S.C.: An overview on machinability of hard to cut materials using laser assisted machining, In: Material today Proceedings, 2021, Vol. 43. When grinding zirconium ceramics, laser assistance achieved the characteristic of chip removal by plastic creep without cracks and with a higher surface quality compared to the classical method of machining that takes place by fracture processes.

The mentioned publication points to the possibility of a several-fold increase in the volume of removed material and a very significant reduction in machining costs using laser assistance.

However, it also points to the fact that the most used machining technology with laser support is turning, and others (milling, grinding, drilling) are equally important, but laser assistance is used rather exceptionally.

The publication Brecher C. et al: Laser-assisted Milling of Advanced Materials, In: Physics Procedia 12 (2011), doi:10.1016/j.phpro.2011.03.076 deals with the specifics of the kinematics of the cutting wedge movement during milling and presents the solution of the Fraunhofer Institute for Production Technology by guiding the laser beam through a hollow spindle and distributing it through mirrors to a place on the workpiece located in front of the cutting wedge.

Publication Ma Z. et al: Effects of laser-assisted grinding on surface integrity of zirconia ceramic, In: Ceramics International 46 (2020) 921-929, https://doi.org/10.1016/j.ceramint.2019.09.051 sa devotes to laser assisting in the process of grinding zirconia ceramics and confirms the conclusions of the above-cited publications regarding the improvement of cutting conditions through laser assistance of the process and the improvement of the quality of the machined surface.

The reason for the above conclusion from the professional publication of the authors Bharat N. and Bose P.S.C., that laser assistance is used in the overwhelming majority of cases for turning, is based on the fact that turning works with very simple kinematics, in which the main working movement - rotational - is performed by the workpiece. In principle, the tool moves only in the plane, and therefore it is relatively simple to place the output device of the laser beam on the mechanism ensuring the movement of the tool. During milling, grinding and drilling, the main rotational movement is performed by the tool, and therefore it is not always possible to aim the laser beam at the exact point of engagement of the cutting wedge. It is even impossible when drilling deep holes.

### Summary of the invention

The invention provides an industrially usable technical solution eliminating the disadvantages of laser-assisted machining (LAM) based on the use of radiation with wavelengths without the ability to penetrate opaque materials.

The proposed technical solution is based on the physical principle of transforming the energy of penetrating coherent radiation into thermal energy during interaction with the material.

The effect of transforming the energy of penetrating rays into thermal energy is described in several materials - e.g. Jangwoo Kim, Ki Hyun Nam: X-ray-Induced Heating in the Vicinity of the X-ray Interaction Point, Applied Sciences, 2023,13, 717, https://doi.org/10.3390/app13020717, or Krygier A. et al: X-ray source characterization and sample heating on x-ray diffraction experiments at the National Ignition Facility, Physics of Plasmas, AIP Publishing.

The second important physical principle used in the invention is the use of penetrating coherent radiations working with ultrashort pulses. In the case of ultra-short pulse sources of coherent radiation, energy transfer does not take place based on the knowledge of classical physics, but the principles of quantum mechanics are applied. During the interaction of an ultra-short pulse of coherent radiation with a high energy density with the material, the energy transformed into heat does not spread primarily based on the laws known from classical physics, but the energy transfer takes place to a significant extent through the non-equilibrium transport of electrons. (Wenqian Hu et al: Energy transport analysis in ultrashort pulse laser ablation through combined molecular dynamics and Monte Carlo simulation, Phys. Rev. B 82, 094111 - Published 17 September 2010).

Another important physical principle used in the invention is the fact that penetrating coherent radiation shows several local extremes of the absorption spectrum of the processed materials - only one maximum is observed with non-penetrating coherent radiation, because the transformation of radiation energy into other forms of energy takes place on a very limited volume of the surface of the interacted material . This principle is for coherent radiation impenetrable in technical materials described when they are used in a transparent material, e.g. in Molly Subhash H., Wang R.: Optical Coherence Tomography: Technical Aspects, ISBN 978-3-642-28390-1. Springer-Verlag Berlin Heidelberg, 2013, DOI 10.1007/978-3-642-28391-8_5. This knowledge is important from the point of view of current knowledge and the resulting principles of the application of non-penetrating coherent radiation, according to which the appropriate absorption spectrum of technical materials is found at much higher values of wavelengths compared to those used in this invention.

The essence of the method of heating the material in order to increase its machinability according to the invention is characterized by the following steps:
- provision of material for machining with poor machinability,
- creation of a temperature field in the volume of material to be immediately removed in the form of chips by applying penetrating coherent radiation in the volume of penetration between two or more beams with a wavelength in the range of 0.5-10 nanometers, while each of the beams delivers energy in a subcritical amount ( ensuring that energy is supplied in the path of the individual beams, which is not capable of causing unwanted heating of other objects in the machining area - e.g. the tool) and while the volume of penetration of the primary beams is completely contained in the surface volume of the workpiece,
- machining with the specified machining technology so that the material intended for removal in the form of chips is removed immediately after heating.

The above-described method of heating the volume of material intended for removal in the form of chips can be applied to all known technical materials characterized by poor machinability, especially extremely tough, strong, hard and brittle materials, including glass, ceramics and semiconductors.

The essence of the invention is based on changing the technologically disadvantageous properties of hard-to-machine materials by heating them to a temperature ensuring their significant improvement.

The thermal field for heating difficult-to-machine material is defined by the following characteristics:
- Energy is delivered through penetrating coherent radiation by two or more beams;
- Each of the beams supplies an amount of energy in a value that is in a subcritical amount from the point of view of the inability to overheat objects in the working space (tool, fixture, etc.);
- By combining the energy of the rays into the thermal field in the focusing volume, the energy of the rays is transformed into thermal energy, which improves the machinability of the volume of material intended for removal in the form of chips.

The basic characteristics of the physical principle used in the invention include:
- the wavelength of the pulsed penetrating coherent radiation for heating the volume of material intended for removal in the form is in the range of 0.5 to 10 nanometers;
- the energy density (Heat flux) of the beam of pulsed penetrating coherent radiation is in the range of 10⁴ Wcm⁻² to 10⁸ Wcm⁻².

The advantages of the volumetric heating method according to the invention are obvious from its effects, which are manifested externally. The novelty (inventive steps) of this approach consists in the practical use of a physical principle that significantly differentiates the invention from the current state of the art.

This principle is the application of pulse penetrating coherent radiation with several beams for heating the volume of material intended for immediate removal in the form of chips.

The technical solution based on the invention is an important inventive step, because it enables the heating of the determined volumes of the workpiece independently of the kinematics of the machining technology, because the beam can also supply energy through the tool, fixture, or workpiece, and the heating process is not negatively affected by the use of a cooling liquid, as is the case with a laser machining assistance in the current state of the art.

A significant difference between the invention and the current state of the art is a different method of heat transformation and propagation in specified volumes of the workpiece. At the current state of the art, the interaction of the used laser beams is characterized by the conversion of the beam energy into thermal energy in a very limited volume on the surface of the workpiece and a certain degree of reflectivity depending on the type of material and the state of its surface. When using the transformation of beam energy into thermal energy according to the invention, there is a more intensive provision of thermal energy in the entire determined volume through the mechanisms of quantum physics.

### Brief description of the drawings

The method of volumetric heating of difficult-to-machine material intended for removal in the form of chips according to the invention is clear from the drawings.

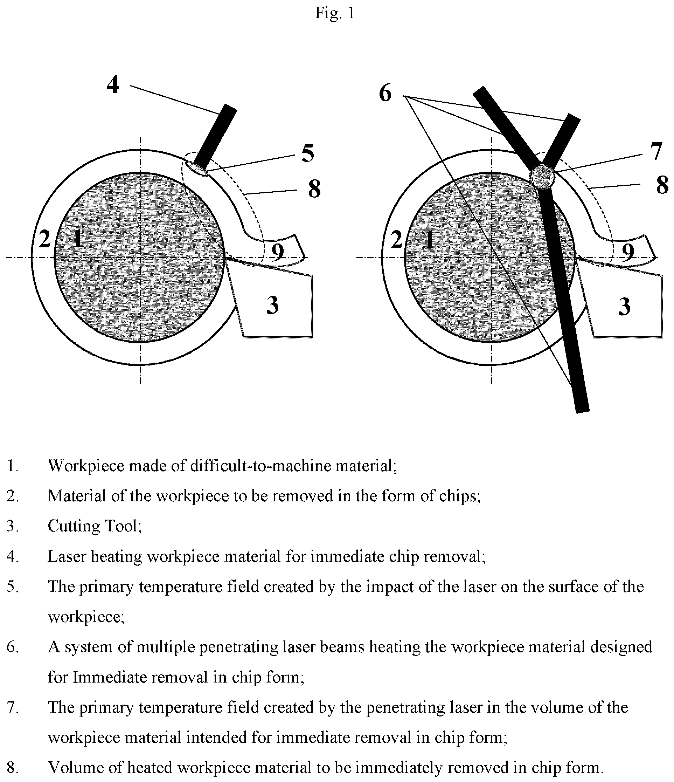

Figure 1 schematically shows the difference between laser-assisted machining according to the current state of the art and laser-assisted machining according to the invention. From the stated principle, it is clear that according to the invention it is possible to provide the energy of beams intended for heating even through a non-transparent environment (tool, workpiece, clamping device, etc.), the focus point can be located at the required depth below the surface of the material, and the energy supplied by the beam is from of the workpiece surface reflected to a much lesser extent.

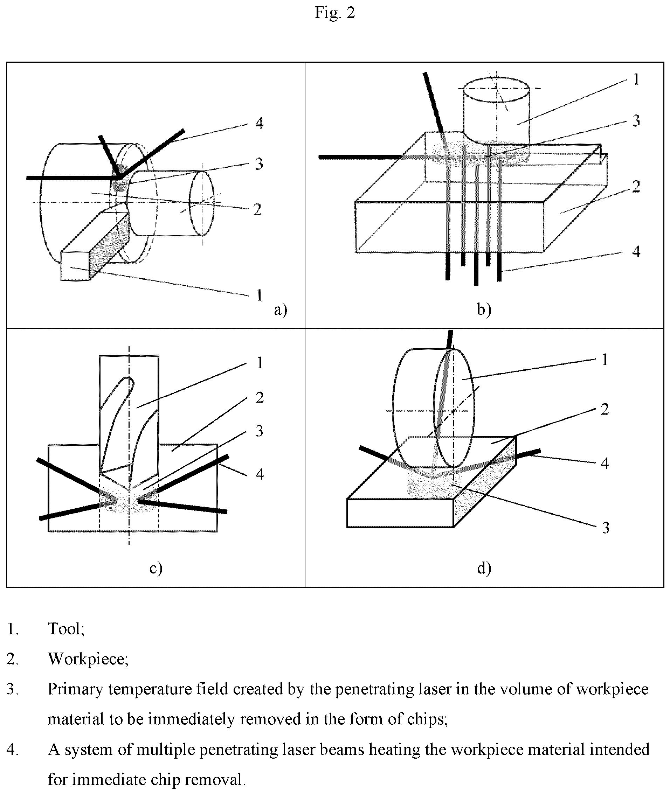

In fig. 2 shows examples of the application of the principles of the invention for typical methods of machining technology - turning, milling, drilling and grinding. In the essence of the invention, however, it is clear that these principles can be applied to all methods of separation technology (Group 3) defined by the DIN 8580 standard.

### Detailed description

It is understood that the individual embodiments of the invention are presented for illustration and not as limitations of the solutions. Those skilled in the art will be able to ascertain equivalent arrangements of the invention using no more than routine experimentation. Even such equivalents fall within the scope of patent claims.

### Example 1

In this example of a specific embodiment, the method of volumetric heating of the material intended for removal in the form of chips during drilling of the Ti6AL4V titanium alloy is described, as illustrated in fig. 3 c). This is the process 3.2 Machining with a geometrically defined cutting wedge according to DIN 8580. The alloy is a high-strength material with low specific gravity, high fracture toughness, excellent corrosion resistance and excellent biocompatibility, but low thermal conductivity. Unsuitable degree of machinability is significantly improved by laser assistance.

Machining with laser assistance according to the invention is carried out in the following steps:
- provision of difficult-to-machine material Ti6AL4V suitable for machining by methods according to subgroup 3.2 of the DIN standard, on which production operations of hole machining are to be performed and its clamping in a suitable jig,
- provision of a cutting tool with the required dimensional characteristics from a cutting material based on tungsten carbide;
- providing a liquid cooling system,
- providing a system for generating a temperature field in a volume of material to be immediately removed in the form of a chip by applying penetrating coherent radiation in the volume of penetration between three beams with a wavelength of 5 to 7 nanometers, each of the beams delivering a subcritical amount of energy and while the volume of penetration of the primary beams is completely contained in the volume of material that will be immediately removed,
- kinematic coupling of the temperature field generation system with the movement of the tool so that a constant relative position of the temperature field to the top of the drill is maintained during machining,
- activating the cooling system and the temperature field generation system and activating the main and secondary cutting movements (cutting speed 60 m.min⁻¹, feed 0.13 mm),
- drilling the hole according to the specification of the drawing documentation.

### Example 2

In this example of a specific embodiment, the method of volumetric heating of the material intended for removal in the form of chips during the grinding of zirconia ceramics is described, as illustrated in fig. 3 d). This is process 3.3 Machining with a geometrically undefined cutting wedge according to the DIN 8580 standard. Machining with laser assistance according to the invention is carried out in the following steps:
- provision of difficult-to-machine material suitable for machining with methods according to subgroup 3.3 of the DIN standard, on which production grinding operations are to be performed and its clamping in a suitable jig,
- provision of a diamond grinding tool with the required dimensional characteristics;
- providing a liquid cooling system,
- providing a system for generating a temperature field in a volume of material to be immediately removed by grinding in the form of a chip by applying penetrating coherent radiation in the volume of penetration between three beams with a wavelength of 8 to 10 nanometers, each of the beams delivering a subcritical amount of energy and while the volume of penetration of the primary of beams is completely contained in the volume of material that will be immediately removed,
- kinematic coupling of the temperature field generation system with the movement of the tool so that a constant relative position of the temperature field to the grinding tool is maintained during machining,
- activating the cooling system and the temperature field generation system and activating the main and secondary cutting movements (cutting speed 50 m.s⁻¹, feed 0.13 mm, cutting depth 4 µm),
- grinding the surface according to the specification defined by the drawing documentation.

### Industrial applicability

The industrial applicability of the method of volume heating of difficult-to-machine material intended for removal in the form of chips according to the invention in areas using methods of separation technology (Group 3) is defined by the DIN 8580 standard with a primary focus on subgroups 3.2 Machining with a geometrically defined cutting wedge and 3.3 Machining with a geometrically undefined cutting edge wedge.

The advantage of the technical solution according to the invention compared to the current state of the art is the generation of heat in the volume of the material and thus its uniform distribution, the significant elimination of radiation reflectivity, and the access to the heating point is not shielded by objects in the working space (tool, fixture, workpiece, cooling medium).

## Claims

1. A method of volume heating before machining difficult-to-machine materials, **characterized in that** it includes the steps:
a. provision of material with poor machinability for machining,
b. providing a cutting tool with the required characteristics,
c. providing a clamping device and clamping the material,
d. provision of a system for generating a temperature field in the volume of material to be immediately removed in the form of chips by applying pulsed penetrating coherent radiation in the volume of penetration between multiple beams with a wavelength of 0.5 to 10 nanometres with an energy density (Heat flux) in the range of 10⁴ Wcm⁻² to 10⁸ Wcm⁻², with each of the beams delivering a subcritical amount of energy in terms of heat generation, and with the beam penetration volume being completely contained in the volume of material to be immediately removed,
e. applying the required machining method.

2. A method of volume heating before machining hard-to-machine materials according to claim 1 **characterized in that** it includes the steps:
a. provision of a cooling system to ensure suitable conditions during machining.

3. A method of volume heating before machining hard-to-machine materials according to claim 1 **characterized in that** it includes the steps:
a. by applying pulsed penetrating coherent radiation between multiple beams with a wavelength of 0.5 to 10 nanometres with an energy density (Heat flux) in the range of 10³ Wcm⁻² to 10⁵ Wcm⁻² provision of heating of the cutting parts of the tool working with a dynamically changing engagement to eliminate thermal shocks generated by rapid heating of the cutting wedge during the cutting phase and rapid cooling during the phase when the cutting wedge is out of engagement in the material.
